# EUROPÄISCHE PATENTSCHRIFT

(11) **EP 1 534 946 B1**
(45) Veröffentlichungstag und Bekanntmachung des Hinweises auf die Patenterteilung: **21.12.2005**
(21) Anmeldenummer: 03750284.6
(22) Anmeldetag: 21.08.2003
(51) Int. Cl.: F02D 9/10, F16K 1/226

(54) **VERFAHREN ZUM ABSCHLIESSEN EINES DROSSELKLAPPENSTUTZENS**
METHOD FOR SEALING A THROTTLE VALVE PORT
PROCEDE POUR FERMER LE VOLET D'UN CLAPET D'ETRANGLEMENT

(30) Priorität: 04.09.2002 DE 10240910
(43) Veröffentlichungstag der Anmeldung: 01.06.2005
(73) Patentinhaber: SIEMENS AKTIENGESELLSCHAFT, 80333 München (DE)
(72) Erfinder: HANNEWALD, Thomas, 64347 Griesheim (DE)
(86) Internationale Anmeldenummer: PCT/DE2003/002782
(87) Internationale Veröffentlichungsnummer: WO 2004/025104

(56) Entgegenhaltungen:
- DE-A- 19 819 364
- GB-A- 1 141 426
- US-A- 4 836 163
- US-A- 5 098 064
- US-A- 5 181 492
- PATENT ABSTRACTS OF JAPAN vol. 013, no. 025 (M-787), 20. Januar 1989 (1989-01-20) & JP 63 235629 A (NIPPON CARBURETER CO LTD), 30. September 1988 (1988-09-30)
- PATENT ABSTRACTS OF JAPAN vol. 2000, no. 11, 3. Januar 2001 (2001-01-03) & JP 2000 210984 A (GE PLASTICS JAPAN LTD;NISSAN MOTOR CO LTD), 2. August 2000 (2000-08-02)

## Beschreibung

Verfahren zum Abschließen von Drosselklappenstutzen sind bekann, (siehe zum Beispiel US 4 836 163). Das Abschließen erfolgt dabei mit Drosselklappen, die mittig im Drosselklappenstutzen auf einer Drosselklappenwelle angeordnet sind. Für eine möglichst niedrige Leerlaufdrehzahl muß die Drosselklappe dabei sehr dicht schließen können, so dass eine nachteilige Leckluft vermieden wird. Bei den heutigen mechanisch oder elektrisch angetriebenen Drosselklappenklappenstutzen versucht man dies durch sehr enge Toleranzen der einzelnen Bauteile zu erreichen. Dies erfordert einen relativ hohen Fertigungsaufwand für den Drosselklappenstutzen und die Drosselklappe, die auf diese engen Toleranzen feinst gedreht werden muß. Dabei muß darauf geachtet werden, dass die Drosselklappe möglichst dicht an der Innenwand des Drosselklappenstutzens anliegt, die Innenwand aber nicht zu fest berührt, da es sonst zu einem Verklemmen der Drosselklappe kommen kann.

Der Erfindung liegt daher die Aufgabe zugrunde, ein Verfahren zum Abschließen eines Drosselklappenstutzens zu schaffen, bei dem auf eine aufwändige Nachbearbeitung des Drosselklappenstutzens oder der Drosselklappe verzichtet werden kann.

Die der Erfindung zugrundeliegende Aufgabe wird durch ein Verfahren zum Abschließen eines Drosselklappenstutzens gelöst, bei dem in einem ersten Schritt ein Unterteil einer zweiteiligen Drosselklappe an einer Drosselklappenwelle fixiert wird, in einem zweiten Schritt mindestens ein elastisches Ausgleichselement auf das Unterteil aufgelegt wird, in einem dritten Schritt ein Oberteil der zweiteiligen Drosselklappe auf das mindestens eine elastische Ausgleichselement aufgelegt und an der Drosselklappenwelle fixiert wird, in einem vierten Schritt durch das Unterteil oder das Oberteil ein Medium zwischen das Unterteil und das Oberteil und das mindestens eine elastische Ausgleichselement eingebracht und das mindestens eine elastische Ausgleichselement an die Innenwand des Drosselklappenstutzens angedrückt wird und in einem fünften Schritt das an die Innenwand des Drosselklappenstutzens angedrückte, mindestens eine elastische Ausgleichselement mit dem Unterteil und dem Oberteil der zweiteiligen Drosselklappe verbunden wird. Die zweiteilige Drosselklappe kann dabei beispielsweise aus zwei kreisrunden Blechen bestehen, die mittig komplementär zur Drosselklappenwelle ausgebildet sind. Sie wird somit durch das Oberteil und das Unterteil gebildet. Der Durchmesser der zweiteiligen Drosselklappe wird so gewählt, dass nach der Fixierung der zweiteiligen Drosselklappe an der Drosselklappenwelle ein Spalt zwischen der zweiteiligen Drosselklappe und der Innenwand des Drosselklappenstutzens von beispielsweise 0,1 bis 0,5 mm verbleibt. Das Fixieren des Unterteils oder des Oberteils der zweiteiligen Drosselklappe an der Drosselklappenwelle kann beispielsweise dadurch erfolgen, dass sowohl das Unterteil als auch das Oberteil an der Drosselklappenwelle befestigt wird. Es ist jedoch auch möglich, lediglich das Unterteil und das Oberteil durch Andrücken an die Drosselklappenwelle in entsprechender gewünschter Weise zu lagern. Im zweiten Schritt wird mindestens ein elastisches Ausgleichselement auf das Unterteil aufgelegt. Dabei können beispielsweise zwei elastische Ausgleichselemente eingesetzt werden, die teilkreisförmig gestaltet sind und mit ihren Enden an der Drosselklappenwelle anliegen. Diese Enden können aber auch beispielsweise an der Drosselklappenwelle entlang geführt sein. In jedem Fall müssen die elastischen Ausgleichselemente mittig einen Freiraum aufweisen, so dass zwischen dem Unterteil der zweiteiligen Drosselklappe, dem elastischem Ausgleichselement und dem Oberteil der zweiteiligen Drosselklappe ein Hohlraum gebildet wird. In diesem Hohlraum wird dann im vierten Schritt das Medium eingebracht, wobei als Medium beispielsweise Luft oder ein anderes Gas eingesetzt werden kann. Das mindestens eine elastische Ausgleichselement wird in den Abmessungen so gewählt, dass nach dem Auflegen auf das Unterteil der zweiteiligen Drosselklappe zwischen ihm und der Innenwand des Drosselklappenstutzens ein Spalt von beispielsweise 0,1 bis 0,5 mm verbleibt. Das mindestens eine elastische Ausgleichselement wird durch das eingebrachte Medium an die Innenwand des Drosselklappenstutzens angedrückt. Das Einbringen des Mediums erfolgt dabei durch Durchtrittsöffnungen im Unterteil oder im Oberteil der zweiteiligen Drosselklappe. Es kann somit sowohl durch das Unterteil als auch durch das Oberteil oder nur durch das Unterteil oder nur durch das Oberteil der zweiteiligen Drosselklappe eingebracht werden. Bei größeren Drosselklappenstutzen ist dabei natürlich für eine entsprechende Entlüftung zu sorgen. In der Position, in der das mindestens eine elastische Ausgleichselement an die Innenwand des Drosselklappenstutzens angedrückt ist, erfolgt im fünften Schritt die Verbindung zwischen dem mindestens einen elastischen Ausgleichselement und dem Unterteil sowie dem Oberteil der zweiteiligen Drosselklappe. Die Verbindung kann dabei formschlüssig oder reibschlüssig erfolgen, je nach Wahl der Materialien für das elastische Ausgleichselement und die zweiteilige Drosselklappe. So kann eine formschlüssige Verbindung beispielsweise durch die Anordnung von Nieten erfolgen. Es hat sich in überraschender Weise gezeigt, dass nach diesem Verfahren ein Abschließen des Drosselklappenstutzens in der Weise erfolgen kann, so dass es bei der Einstellung der Leerlaufdrehzahl nicht zu einer Bildung von Leckluft kommt. Dabei ist vorteilhaft, dass auf die Einstellung von geringen Toleranzbereichen der zweiteiligen Drosselklappe und des Drosselklappenstutzens verzichtet werden kann. Die zweiteilige Drosselklappe muß somit nicht feinst gedreht werden, und der Drosselklappenstutzen muß ebenfalls an seiner Innenwand nicht aufwändig nachbearbeitet werden.

Eine bevorzugte Ausgestaltung der Erfindung besteht darin, dass die Fixierung des Unterteils und des Oberteils der zweiteiligen Drosselklappe an der Drosselklappenwelle durch Andrücken eines ersten Stempels und eines zweiten Stempels erfolgt, die beidseitig in den Drosselklappenstutzen eingebracht werden. Bei dem ersten Stempel und dem zweiten Stempel handelt es sich in der Regel um im Querschnitt kreisförmig gestaltete Wellenstücke, die an ihren, der Drosselklappenwelle zugewandten Enden komplementär zum Unterteil bzw. zum Oberteil der zweiteiligen Drosselklappe ausgebildet sind. Entweder der erste Stempel oder der zweite Stempel oder beide müssen dabei einen Zufuhrkanal für das Medium aufweisen, dessen Austritt bündig mit der jeweiligen Durchbruchsöffnung des Unterteils oder des Oberteils der zweiteiligen Drosselklappe bündig abschließt. Sie liegen dicht an der Innenwand des Drosselklappenstutzens an, wobei gleichzeitig eine vorteilhaft Abdichtung zur Umgebung erreicht wird. Besonders vorteilhaft ist in diesem Zusammenhang, dass auf zusätzliche Befestigungselemente, wie Schrauben oder Nieten zur Fixierung des Unterteils oder des Oberteils der zweiteiligen Drosselklappe an der Drosselklappenwelle verzichtet werden kann.

Gemäß einer weiteren bevorzugten Ausgestaltung der Erfindung wird als Medium ein Montageschaum eingebracht. Als Montageschaum kann dabei beispielsweise ein Montage-Klebe-Schaum auf MS-Polymerbasis eingesetzt werden, wie er von der Firma Henkel vertrieben wird. Dadurch ist in vorteilhafter Weise ein gleichmäßiges Andrücken des mindestens einen elastischen Ausgleichselements an die Innenwand des Drosselklappenstutzens gewährleistet, so dass an der Verbindungsstelle zwischen dem mindestens einen elastischen Ausgleichselement und der Innenwand des Drosselklappenstutzens über den gesamten teilkreisförmigen Bereich gleichmäßige Bedingungen eingestellt werden können.

Nach einer weiteren bevorzugten Ausgestaltung der Erfindung ist das elastische Ausgleichselement einteilig ausgeführt und weist zwei gegenüberliegende Durchbrüche auf, der zweite Schritt entfällt und das elastische Ausgleichselement wird vor dem ersten Schritt in einem Vorschritt mit den zwei gegenüberliegenden Durchbrüchen auf die Drosselklappenwelle aufgeschoben. Die zwei gegenüberliegenden Durchbrüche können dabei so gestaltet sein, dass sie jeweils in die Lagerbohrungen für die Drosselklappenwelle hineinragen. Dadurch wird in vorteilhafter Weise eine Luftabdichtung zum Wellendurchbruch erreicht. Der Innendurchmesser der gegenüberliegenden Durchbrüche entspricht somit in etwa dem Außendurchmesser der Drosselklappenwelle, wobei natürlich sicherzustellen ist, dass das elastische Ausgleichselement noch auf die Drosselklappenwelle aufgeschoben werden kann. Auf diese Weise wird die Positionierung des elastischen Ausgleichselements in vorteilhafter Weise vereinfacht.

Nach einer weiteren Ausgestaltung der Erfindung ist vorgesehen, dass eine zweiteilige Drosselklappe aus Metall und mindestens ein elastisches Ausgleichselement aus Kunststoff eingesetzt werden. Dies vereinfacht das Andrücken des mindestens einen elastischen Ausgleichselements an die Innenwand des Drosselklappenstutzens.

Nach einer weiteren bevorzugten Ausgestaltung der Erfindung wird eine zweiteilige Drosselklappe aus Kunststoff und mindestens ein elastisches Ausgleichselement aus Kunststoff eingesetzt. Eine Verbindung der zweiteiligen Drosselklappe mit dem mindestens einen elastischen Ausgleichselement wird dadurch vorteilhaft erleichtert.

Gemäß einer weiteren Ausgestaltung der Erfindung wird als Kunststoff Polyamid-6 eingesetzt. Polyamid-6 ist besonders widerstandsfähig, gerade unter den Bedingungen, wie sie im Drosselklappenstutzen während des Betriebs zu verzeichnen sind.

Gemäß einer weiteren bevorzugten Ausgestaltung der Erfindung werden eine zweiteilige Drosselklappe aus Aluminium und mindestens ein elastisches Ausgleichselement aus Aluminium eingesetzt. Das elastische Ausgleichselement hat dabei die Form eines dünnen Metallbandes. Dabei ist vorteilhaft, dass ein Verbinden der zweiteiligen Drosselklappe mit dem mindestens einen elastischen Ausgleichselement durch Punktschweißen realisiert werden kann.

Nach einer weiteren bevorzugten Ausgestaltung der Erfindung wird das an die Innenwand des Drosselklappenstutzens angedrückte, mindestens eine elastische Ausgleichselement mit dem Unterteil und dem Oberteil der zweiteiligen Drosselklappe durch Kleben verbunden, wobei der Klebstoff im Vorschritt oder im zweiten Schritt oder im dritten Schritt auf das Unterteil oder das Oberteil oder das mindestens eine elastische Ausgleichselement aufgegeben wird. Als Klebstoff kann dabei beispielsweise ein Zweikomponenten-Kleber auf Methacrylat-Basis (beispielsweise von Pattex Stabilitexpress) eingesetzt werden. Die Befestigung des mindestens einen elastischen Ausgleichselements mit der zweiteiligen Drosselklappe kann dadurch besonders einfach erfolgen, wobei auf eine Anordnung von weiteren Befestigungselementen, wie beispielsweise Nieten, verzichtet werden kann.

Eine weitere bevorzugte Ausgestaltung der Erfindung besteht darin, dass das Verbinden des an die Innenwand des Drosselklappenstutzens angedrückten, mindestens einen elastischen Ausgleichselements mit dem Unterteil und dem Oberteil der zweistufigen Drosselklappe durch Lasern erfolgt. Dadurch kann eine besonders stabile Verbindung zwischen der zweiteiligen Drosselklappe und dem mindestens einen elastischen Ausgleichselement erreicht werden, die über längere Betriebszeiten stabil bleibt und relativ einfach geschaffen werden kann.

Gemäß einer weiteren bevorzugten Ausgestaltung der Erfindung erfolgt das Verbinden des an die Innenwand des Drosselklappenstutzens angedrückten, mindestens einen elastischen Ausgleichselements mit dem Unterteil und dem Oberteil der zweiteiligen Drosselklappe allein durch den als Medium eingesetzten Montageschaum. Dabei ist vorteilhaft, dass eine Verbindung unmittelbar nach dem Andrücken des mindestens einen Ausgleichselements an die Innenwand des Drosselklappenstutzens erfolgt und dass auf jedwede weitere Verbindungselemente, wie Nieten, Schrauben oder Klebstoffe vorteilhaft verzichtet werden kann.

Die Erfindung wird nachfolgend anhand der Zeichnung (Fig. 1 bis Fig. 3) näher und beispielhaft erläutert.

Fig. 1 zeigt einen Drosselklappenstutzen im Querschnitt mit der zweiteiligen Drosselklappe und einem einteiligen elastischen Ausgleichselement.

Fig. 2 zeigt den Drosselklappenstutzen im Querschnitt gemäß Schnitt A-A in Fig. 1.

Fig. 3 zeigt einen Drosselklappenstutzen im Querschnitt mit der zweiteiligen Drosselklappe, einem zweiteiligen elastischen Ausgleichselement sowie einem ersten Stempel und einem zweiten Stempel.

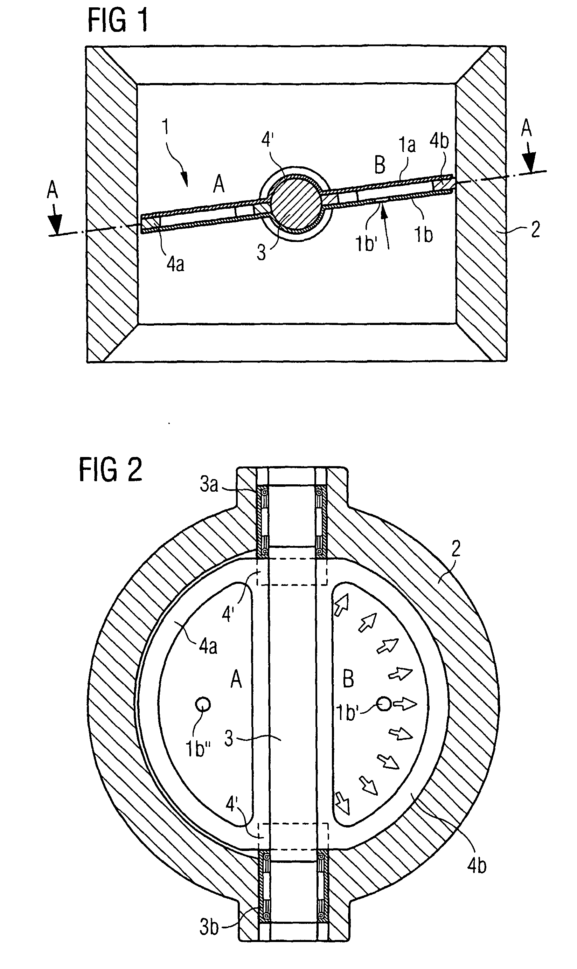

In Fig. 1 ist der Drosselklappenstutzen 2 im Querschnitt dargestellt. Die hälftige Darstellung A zeigt dabei den Zustand, in welchem das elastische Ausgleichselement 4a noch einen gewissen Abstand zum Drosselklappenstutzen 2 aufweist. In der hälftigen Darstellung B liegt das elastische Ausgleichselement 4b direkt an der Innenwand des Drosselklappenstutzens 2 an. Bei dem Verfahren zum Abschließen des Drosselklappenstutzens 2 wird in einem ersten Schritt ein Unterteil 1b einer zweiteiligen Drosselklappe 1 an der Drosselklappenwelle 3 fixiert. In einem zweiten Schritt wird mindestens ein elastisches Ausgleichselement 4a, 4b auf das Unterteil 1b aufgelegt. In einem dritten Schritt wird das Oberteil 1a der zweiteiligen Drosselklappe 1 auf das mindestens eine elastische Ausgleichselement 4a, 4b aufgelegt und an der Drosselklappenwelle fixiert. Diesen Zustand zeigt die hälftige Darstellung A. Gemäß Fig. 1 sind die elastischen Ausgleichselemente 4a, 4b einteilig ausgeführt und weisen zwei gegenüberliegende Durchbrüche 4' auf, die halb- oder kreisrund gestaltet sind und deren Innendurchmesser nahezu dem Außendurchmesser der Drosselklappenwelle 3 entspricht. Wird ein solches elastisches Ausgleichselement 4a, 4b eingesetzt, so entfällt der zweite Schritt des Verfahrens und das elastische Ausgleichselement 4a, 4b wird vor dem ersten Schritt in einem Vorschritt mit den zwei gegenüberliegenden Durchbrüchen 4' auf die Drosselklappenwelle 3 aufgeschoben. Anschließend erfolgt der erste Schritt bei dem das Unterteil 1b der zweiteiligen Drosselklappe 1 an der Drosselklappenwelle 3 fixiert wird. Sofern die Verbindung zwischen dem mindestens einen elastischen Ausgleichselement 4a, 4b und der zweiteiligen Drosselklappe 1 mit Hilfe eines Klebstoffes realisiert werden soll, so ist dafür zu sorgen, dass der eingesetzte Klebstoff im Vorschritt oder im zweiten Schritt oder im dritten Schritt auf das Unterteil 1b oder das Oberteil 1a oder das mindestens eine elastische Ausgleichselement 4a, 4b aufgegeben wird. Dabei ist es natürlich möglich, mehrere Teile mit dem Klebstoff zu versehen. In einem vierten Schritt wird durch das Unterteil 1b ein Medium zwischen das Unterteil 1b und das Oberteil 1a und das mindestens eine elastische Ausgleichselement 4b durch die Durchtrittsöffnung 1b' in Pfeilrichtung eingebracht. Dabei können beispielsweise Gase als Medium eingesetzt werden. Es ist jedoch auch möglich, als Medium ein Montageschaum einzubringen, der gleichzeitig der Befestigung des mindestens einen elastischen Ausgleichselements 4b mit dem Unterteil 1b und dem Oberteil 1a der zweiteiligen Drosselklappe 1 dient. Durch das Einbringen des Mediums wird das mindestens eine elastische Ausgleichselement 4a, 4b an die Innenwand des Drosselklappenstutzens 2 angedrückt. In einem fünften Schritt erfolgt schließlich die Verbindung des an die Innenwand des Drosselklappenstutzens angedrückten, mindestens einen elastischen Ausgleichselements 4a, 4b mit dem Unterteil 1b und dem Oberteil 1a der zweiteiligen Drosselklappe 1.

In Fig. 2 ist der Drosselklappenstutzen 2 im Querschnitt gemäß Schnitt A-A in Fig. 1 dargestellt. Die zwei gegenüberliegenden Durchbrüche 4' des einteiligen Ausgleichselements 4a, 4b sind lediglich gestrichelt dargestellt, um zu verdeutlichen, dass die elastischen Ausgleichselemente 4a, 4b auch getrennt voneinander zweiteilig eingesetzt werden können. In diesem Fall ist es erforderlich, beispielsweise im Unterteil 1b der zweiteiligen Drosselklappe 1 eine weitere Durchtrittsöffnung 1b" zu schaffen, um das Medium in entsprechender Weise einzubringen, wie es in Fig. 2 dargestellt ist. Sofern jedoch das mindestens eine elastische Ausgleichselement 4a, 4b einteilig gestaltet ist und zwei gegenüberliegende Durchbrüche 4' aufweist, ist es möglich, dass diese auch in die Lagerbohrungen der Lager 3a, 3b hineinragen, wodurch eine Luftabdichtung zum Wellendurchbruch in vorteilhafter Weise erzielt werden kann.

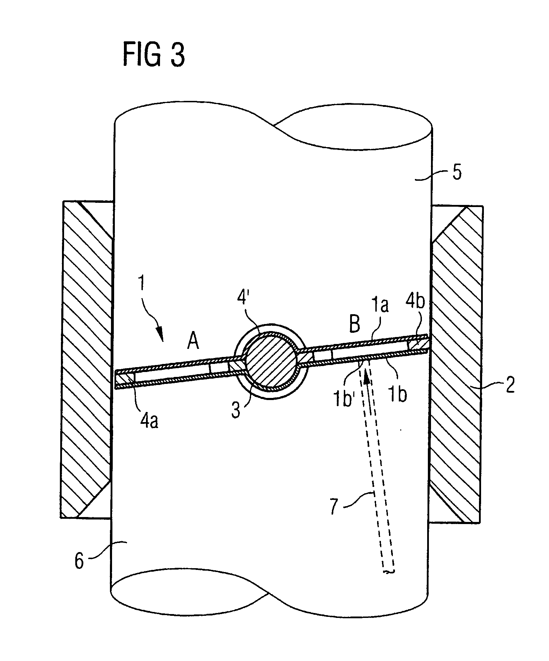

In Fig. 3 ist der Drosselklappenstutzen 2 im Querschnitt dargestellt. Die Fixierung des Unterteils 1b und des Oberteils 1a der zweiteiligen Drosselklappe 1 an der Drosselklappenwelle 3 erfolgt durch Andrücken eines ersten Stempels 6 und eines zweiten Stempels 5, die beidseitig in den Drosselklappenstutzen 2 eingebracht werden. Sie sind im Querschnitt kreisförmig gestaltet und an ihren, der Drosselklappenwelle 3 zugewandten Enden komplementär zur zweiteiligen Drosselklappe ausgebildet. Der erste Stempel 6 weist einen Zufuhrkanal 7 auf, durch welches das Medium eingebracht werden kann. Das der zweiteiligen Drosselklappe 1 zugewandte Ende des Zufuhrkanals 7 mündet direkt in die Durchtrittsöffnung 1b' des Unterteils 1b der zweiteiligen Drosselklappe 1. Der erste Stempel 6 und der zweite Stempel 5 liegen dichtend an der Innenwand des Drosselklappenstutzens 2 an. Es ist jedoch auch möglich, den zweiten Stempel 5 mit entsprechenden Kanälen (nicht dargestellt) für die Zufuhr von Medien bzw. zur Entlüftung zu versehen.

## Patentansprüche

1. Verfahren zum Abschließen eines Drosselklappenstutzens (2), bei dem in einem ersten Schritt ein Unterteil (1b) einer zweiteiligen Drosselklappe (1) an einer Drosselklappenwelle (3) fixiert wird, in einem zweiten Schritt mindestens ein elastisches Ausgleichselement (4a, 4b) auf das Unterteil (1b) aufgelegt wird, in einem dritten Schritt ein Oberteil (1a) der zweiteiligen Drosselklappe (1) auf das mindestens eine elastische Ausgleichselement (4a, 4b) aufgelegt und an der Drosselklappenwelle (3) fixiert wird, in einem vierten Schritt durch das Unterteil (1b) oder das Oberteil (1a) ein Medium zwischen das Unterteil (1b) und das Oberteil (1a) und das mindestens eine elastische Ausgleichselement (4a, 4b) eingebracht und das mindestens eine elastische Ausgleichselement (4a, 4b) an die Innenwand des Drosselklappenstutzens (2) angedrückt wird und in einem fünften Schritt das an die Innenwand des Drosselklappenstutzens (2) angedrückte, mindestens eine elastische Ausgleichselement (4a, 4b) mit dem Unterteil (1b) und dem Oberteil (1a) der zweiteiligen Drosselklappe (1) verbunden wird.

2. Verfahren nach Anspruch 1, bei dem die Fixierung des Unterteils (1b) und des Oberteils (1a) der zweiteiligen Drosselklappe (1) an der Drosselklappenwelle (3) durch Andrücken eines ersten Stempels (6) und eines zweiten Stempels (5) erfolgt, die beidseitig in den Drosselklappenstutzen (2) eingebracht werden.

3. Verfahren nach Anspruch 1 oder Anspruch 2, bei dem als Medium ein Montageschaum eingebracht wird.

4. Verfahren nach einem der Ansprüche 1 bis 3, bei dem das elastische Ausgleichselement (4a, 4b) einteilig ausgeführt ist und zwei gegenüberliegende Durchbrüche (4') aufweist und bei dem der zweite Schritt entfällt und das elastische Ausgleichselement (4a, 4b) vor dem ersten Schritt in einem Vorschritt mit den zwei gegenüberliegenden Durchbrüchen (4') auf die Drosselklappenwelle (3) aufgeschoben wird.

5. Verfahren nach einem der Ansprüche 1 bis 4, bei dem eine zweiteilige Drosselklappe (1) aus Metall und mindestens ein elastisches Ausgleichselement (4a, 4b) aus Kunststoff eingesetzt werden.

6. Verfahren nach einem der Ansprüche 1 bis 4, bei dem eine zweiteilige Drosselklappe (1) aus Kunststoff und mindestens ein elastisches Ausgleichselement (4a, 4b) aus Kunststoff eingesetzt werden.

7. Verfahren nach Anspruch 5 oder 6, bei dem als Kunststoffe Polyamid-6 eingesetzt wird.

8. Verfahren nach einem der Ansprüche 1 bis 4, bei dem eine zweiteilige Drosselklappe (1) aus Aluminium und mindestens ein elastisches Ausgleichselement (4a, 4b) aus Aluminium eingesetzt werden.

9. Verfahren nach einem der Ansprüche 1 bis 8, bei dem das an die Innenwand des Drosselklappenstutzens (2) angedrückte, mindestens eine elastische Ausgleichselement (4a, 4b) mit dem Unterteil (1b) und dem Oberteil (1a) der zweiteiligen Drosselklappe (1) durch Kleben verbunden wird, wobei der Klebstoff im Vorschritt oder im zweiten Schritt oder im dritten Schritt auf das Unterteil (1b) oder das Oberteil (1a) oder das mindestens eine elastische Ausgleichselement (4a, 4b) aufgegeben wird.

10. Verfahren nach einem der Ansprüche 1 bis 4, 6 bis 8, bei dem das Verbinden des an die Innenwand des Drosselklappenstutzens (2) angedrückten, mindestens einen elastischen Ausgleichselements (4a, 4b) mit dem Unterteil (1b) und dem Oberteil (1a) der zweistufigen Drosselklappe (1) durch Lasern erfolgt.

11. Verfahren nach einem der Ansprüche 1 bis 8, bei dem das Verbinden des an die Innenwand des Drosselklappenstutzens (2) angedrückten, mindestens einen elastischen Ausgleichselements (4a, 4b) mit dem Unterteil (1b) und dem Oberteil (1a) der zweiteiligen Drosselklappe (1) allein durch den als Medium eingesetzten Montageschaum erfolgt.

## Claims

1. Method for closing off a throttle valve housing (2), in which in a first step a lower part (1b) of a two-part throttle valve (1) is fixed to a throttle valve shaft (3), in a second step at least one elastic compensation element (4a, 4b) is laid onto the lower part (1b), in a third step an upper part (1a) of the two-part throttle valve (1) is laid onto the at least one elastic compensation element (4a, 4b) and is fixed to the throttle valve shaft (3), in a fourth step a medium is introduced through the lower part (1b) or the upper part (1a) between the lower part (1b) and the upper part (1a) and the at least one elastic compensation element (4a, 4b), and the at least one elastic compensation element (4a, 4b) is pressed against the inner wall of the throttle valve housing (2), and, in a fifth step, the at least one elastic compensation element (4a, 4b) pressed against the inner wall of the throttle valve housing (2) is connected to the lower part (1b) and the upper part (1a) of the two-part throttle valve (1).

2. Method according to Claim 1, in which the fixing of the lower part (1b) and of the upper part (1a) of the two-part throttle valve (1) to the throttle valve shaft (3) takes place by the pressing of a first die (6) and of a second die (5) which are introduced into the throttle valve housing (2) on both sides.

3. Method according to Claim 1 or Claim 2, in which the medium introduced is a mounting foam.

4. Method according to one of Claims 1 to 3, in which the elastic compensation element (4a, 4b) is of one-part design and has two opposite perforations (4'), and in which the second step is dispensed with, and before the first step, in a preliminary step, the elastic compensation element (4a, 4b) is pushed with the two opposite perforations (4') onto the throttle valve shaft (3).

5. Method according to one of Claims 1 to 4, in which a two-part throttle valve (1) made from metal and at least one elastic compensation element (4a, 4b) made from plastic are used.

6. Method according to one of Claims 1 to 4, in which a two-part throttle valve (1) made from plastic and at least one elastic compensation element (4a, 4b) made from plastic are used.

7. Method according to Claim 5 or 6, in which the plastics used are polyamide-6.

8. Method according to one of Claims 1 to 4, in which a two-part throttle valve (1) made from aluminium and at least one elastic compensation element (4a, 4b) made from aluminium are used.

9. Method according to one of Claims 1 to 8, in which the at least one elastic compensation element (4a, 4b) pressed against the inner wall of the throttle valve housing (2) is connected to the lower part (1b) and the upper part (1a) of the two-part throttle valve (1) by adhesive bonding, the adhesive being applied to the lower part (1b) or the upper part (1a) or the at least one elastic compensation element (4a, 4b) in the preliminary step or in the second step or in the third step.

10. Method according to one of Claims 1 to 4, 6 to 8, in which the connection of the at least one elastic compensation element (4a, 4b) pressed against the inner wall of the throttle valve housing (2) to the lower part (1b) and the upper part (1a) of the two-stage throttle valve (1) takes place by lasing.

11. Method according to one of Claims 1 to 8, in which the connection of the at least one elastic compensation element (4a, 4b) pressed against the inner wall of the throttle valve housing (2) to the lower part (1b) and the upper part (1a) of the two-part throttle valve (1) takes place solely by means of the mounting foam used as medium.

## Revendications

1. Procédé destiné à fermer une tubulure (2) à papillon de régulation des gaz, au cours duquel, dans un premier pas, une partie inférieure (1b) d'un papillon (1) de régulation des gaz en deux parties est fixée sur un arbre (3) de papillon de régulation des gaz, dans un deuxième pas, au moins un élément élastique de compensation (4a, 4b) est appliqué sur la partie inférieure (1b), dans un troisième pas, une partie supérieure (1a) du papillon (1) de régulation des gaz en deux parties est appliquée sur le au moins un élément élastique de compensation (4a, 4b) et est fixée sur l'arbre (3) du papillon de régulation des gaz, dans un quatrième pas, une substance est apportée, à travers la partie inférieure ou la partie supérieure, entre la partie inférieure (1b) et la partie supérieure (1a) et le au moins un élément élastique de compensation (4a, 4b) et presse le au moins un élément élastique de compensation (4a, 4b) contre la paroi intérieure de la tubulure (2) à papillon de régulation des gaz et, dans un cinquième pas, le au moins un élément élastique de compensation (4a, 4b) pressé contre la paroi intérieure de la tubulure (2) à papillon de régulation des gaz est lié à la partie inférieure (1b) et à la partie supérieure (1a) du papillon (1) de régulation des gaz en deux parties.

2. Procédé selon la revendication 1 dans lequel la fixation de la partie inférieure (1b) et de la partie supérieure (1a) du papillon (1) de régulation des gaz en deux parties sur l'arbre (3) du papillon de régulation des gaz se fait en enfonçant un premier poinçon (6) et un deuxième poinçon (5), qui sont insérés des deux côtés dans la tubulure (2) à papillon de régulation des gaz.

3. Procédé selon la revendication 1 ou la revendication 2 au cours duquel une mousse de montage est insérée en tant que substance.

4. Procédé selon l'une des revendications 1 à 3, dans lequel l'élément élastique de compensation (4a, 4b) est en une seule pièce et comporte deux ouvertures (4') se faisant face et dans lequel le deuxième pas est supprimé et l'élément élastique de compensation (4a, 4b) est engagé, au cours d'un pas préliminaire avant le premier pas, par les deux ouvertures (4') se faisant face, sur l'arbre (3) du papillon de régulation des gaz.

5. Procédé selon l'une des revendications 1 à 4 dans lequel sont utilisés un papillon (1) de régulation des gaz en deux parties en métal et au moins un élément élastique de compensation (4a, 4b) en matière plastique.

6. Procédé selon l'une des revendications 1 à 4 dans lequel sont utilisés un papillon (1) de régulation des gaz en deux parties en matière plastique et au moins un élément élastique de compensation (4a, 4b) en matière plastique.

7. Procédé selon les revendications 5 ou 6 dans lequel du polyamide 6 est utilisé comme matière plastique.

8. Procédé selon l'une des revendications 1 à 4 dans lequel sont utilisés un papillon (1) de régulation des gaz en deux parties en aluminium et au moins un élément élastique de compensation (4a, 4b) en aluminium.

9. Procédé selon l'une des revendications 1 à 8 dans lequel le au moins un élément élastique de compensation (4a, 4b) pressé contre la paroi intérieure de la tubulure (2) à papillon de régulation des gaz est lié par collage à la partie inférieure (1b) et à la partie supérieure (1a) du papillon (1) de régulation des gaz en deux parties, la colle étant appliquée, au cours du pas préliminaire ou du deuxième pas ou du troisième pas, sur la partie inférieure (1b) ou sur la partie supérieure (1a) ou sur le au moins un élément élastique de compensation (4a, 4b).

10. Procédé selon l'une des revendications 1 à 4, 6 à 8 dans lequel le lien du au moins un élément élastique de compensation (4a, 4b) pressé contre la paroi intérieure de la tubulure (2) à papillon de régulation des gaz avec la partie inférieure (1b) et avec la partie supérieure (1a) du papillon (1) de régulation des gaz en deux parties est réalisé par laser.

11. Procédé selon l'une des revendications 1 à 8 dans lequel le lien du au moins un élément élastique de compensation (4a, 4b) pressé contre la paroi intérieure de la tubulure (2) à papillon de régulation des gaz avec la partie inférieure (1b) et avec la partie supérieure (1a) du papillon (1) de régulation des gaz en deux parties est réalisé uniquement par la mousse de montage utilisée comme substance.
